# EUROPÄISCHE PATENTSCHRIFT

(11) **EP 1 973 975 B1**
(45) Veröffentlichungstag und Bekanntmachung des Hinweises auf die Patenterteilung: **13.07.2011**
(21) Anmeldenummer: 06841546.2
(22) Anmeldetag: 21.12.2006
(51) Int. Cl.: C09B 67/22

(54) **HARZHALTIGE FESTE PIGMENTZUBEREITUNGEN**
SOLID PIGMENT PREPARATIONS CONTAINING RESIN
PREPARATIONS PIGMENTAIRES SOLIDES RESINEUSES

(30) Priorität: 05.01.2006 DE 102006000997
(43) Veröffentlichungstag der Anmeldung: 01.10.2008
(73) Patentinhaber: BASF SE, 67056 Ludwigshafen (DE)
(72) Erfinder: BAUER, Ruth, 68165 Mannheim (DE); SEEGER, Oliver, 68165 Mannheim (DE); BRAMNIK, Kirill, 68163 Mannheim (DE)
(86) Internationale Anmeldenummer: PCT/EP2006/070077
(87) Internationale Veröffentlichungsnummer: WO 2007/077149

(56) Entgegenhaltungen:
- EP-A2- 1 277 808
- WO-A-02/055610
- WO-A-2004/078852
- DE-A1- 2 856 222
- DE-A1- 4 404 809
- DE-A1- 19 813 394

## Beschreibung

Die vorliegende Erfindung betrifft feste Pigmentzubereitungen, enthaltend als wesentliche Komponenten
(A) 80 bis 99,5 Gew.-% einer Pigmentkomponente aus mindestens einem organischen Pigment (A1) und einem anorganischen Pigment (A2)
   und
(B) 0,5 bis 20 Gew.-% mindestens eines wasserlöslichen/wasserverdünnbaren Aldehyd- oder Ketonharzes.

Außerdem betrifft die Erfindung ein Verfahren zur Herstellung dieser Pigmentzubereitungen sowie ihre Verwendung zur Einfärbung von Lacken, Druckfarben, Kunststoffen, Baustoffen und Zubereitungen der dekorativen Kosmetik.

Pigmentzubereitungen, die sowohl organisches als auch anorganisches Pigment enthalten, sind bereits seit längerer Zeit von besonderem Interesse, da sie die Möglichkeit bieten, die Vorteile organischer Pigmente (hohe Farbstärke, hohe Farbtonreinheit) mit denen anorganischer Pigmente (gutes Deckvermögen, hoher Glanz) zu kombinieren.

Ihre Herstellung erfolgt in der Regel durch Mahlung einer Mischung von organischem und anorganischem Pigment. Neben Trockenmahlverfahren werden in der Patentliteratur insbesondere auch Naßmahlverfahren beschrieben.

So sind aus US-A-4 226 634 Pigmentzubereitungen auf Basis von Rutilmischphasenpigmenten und organischen Pigmenten bekannt, die durch Naßmahlung der Pigmente mit Glasperlen unter Einwirkung von Scherkräften hergestellt werden. Die vorwiegend wäßrigen Mahlsuspensionen enthalten dabei keine weiteren Hilfsstoffe.

In der EP-A-985 712 werden auf Bismutvanadat- oder Rutilmischphasenpigmenten und organischen Pigmenten, insbesondere C.I. Pigment Yellow 138 und 139, basierende Pigmentzubereitungen in Granulatform beschrieben, die durch wäßrige Mahlung von anorganischem und organischem Pigment mit Glasperlen und anschließende Sprühtrocknung erhalten werden. Es wird erwähnt, daß bei der Mahlung bis zu 2 Gew.-% Dispergierhilfsmittel, bezogen auf die Pigmente, zugesetzt werden können, in den Beispielen erfolgt dieser Zusatz jedoch nicht.

Die WO-A-2004/78852 beschreibt Pigmentzubereitungen auf Basis von Rutilmischphasenpigmenten und organischen Rot- und Gelbpigmenten, die durch wäßrige Naßmahlung der Pigmente in Gegenwart von 1 bis 2 Gew.-%, bezogen auf die Pigmente, einer oberflächenaktiven Substanz in Form einer makromolekularen organischen Verbindung hergestellt werden. Die oberflächenaktive Substanz soll dabei ein organisch modifiziertes Polyacrylat, ein modifiziertes Fettsäurederivat, ein Blockcopolymer mit oberflächenaktiven Funktionen oder ein Alkylammoniumsalz polyfunktioneller Polymere sein.

Schließlich sind in der EP-A-1 277 808 Pigmentzubereitungen aus anorganischem oder organischem Pigment und einem Harnstoff/Aldehydharz bekannt. Diese Pigmentzubereitungen werden jedoch nicht durch Mahlung sondern durch Extrusion einer Mischung von Pigment und Harz hergestellt und enthalten mindestens 20 Gew.-% Harz.

Der Erfindung lag die Aufgabe zugrunde, Pigmentzubereitungen auf Basis organischer und anorganischer Pigmente bereitzustellen, die sich durch vorteilhafte Anwendungseigenschaften, insbesondere eine homogene Durchmischung von organischem und anorganischem Pigment, auszeichnen.

Demgemäß wurden pulverförmige Pigmentzubereitungen gefunden, die als wesentliche Komponenten
(A) 80 bis 99,5 Gew.-% einer Pigmentkomponente aus mindestens einem organischen Pigment (A1) und einem anorganischen Pigment (A2)
   und
(B) 0,5 bis 20 Gew.-% mindestens eines wasserlöslichen/wasserverdünnbaren Aldehyd- oder Ketonharzes.
enthalten.

Weiterhin wurde ein Verfahren zur Herstellung dieser Pigmentzubereitungen gefunden, welches dadurch gekennzeichnet ist, daß man das organische Pigment (A1) und das anorganische Pigment (A2) einer Zerkleinerung in wäßrigem Medium in Gegenwart des Harzes (B) unterzieht.

Außerdem wurde die Verwendung der Pigmentzubereitungen zur Einfärbung von Lacken, Druckfarben, Kunststoffen, Baustoffen und Zubereitungen der dekorativen Kosmetik gefunden.

Die erfindungsgemäßen Pigmentzubereitungen zeichnen sich durch eine besonders homogene Durchmischung von organischem und anorganischem Pigment aus, die auch zu einer vorteilhaften, homogenen Einarbeitbarkeit der Pigmentzubereitungen in alle Anwendungsmedien führt. Überraschenderweise weisen die Pigmentzubereitungen trotz der Verdünnung durch das Harz (B) eine Farbstärke auf, die mindestens auf demselben hohen Niveau wie die Farbstärke der in der älteren deutschen Patentanmeldung 10 2004 040 670.7 beschriebenen, durch intensive Trockenmischung der Pigmente hergestellten Zubereitungen liegt.

Die erfindungsgemäßen Pigmentzubereitungen unterliegen keiner Einschränkung hinsichtlich der Auswahl des organischen Pigments (A1) und des anorganischen Pigments (A2).

Besondere Bedeutung haben die erfindungsgemäßen Pigmentzubereitungen als Ersatz von Bleichromat- und Bleimolybdatpigmenten für den Farbtonbereich Rot-Orange-Gelb.

Dementsprechend handelt es sich bei dem in den erfindungsgemäßen Pigmentzubereitungen enthaltenen organischen Pigment (A1) vorzugsweise um ein Pigment aus der Reihe der Pyrazolonchinazolonpigmente, Isoindolinpigmente, Azopigmente, Diketopyrrolopyrrolpigmente oder Chinophthalonpigmente oder um Kombinationen dieser Pigmente.

Beispiele für besonders geeignete Pigmente (A1) aus diesen Pigmentklassen sind:
- Pyrazolonchinazolonpigmente:
   C.I. Pigment Orange 67 und C.I. Pigment Red 216;
- Isoindolinpigmente:
   C.I. Pigment Yellow 139 und 185;
   C.I. Pigment Orange 61 und 69;
   C.I. Pigment Red 260;
- Azopigmente:
   C.I. Pigment Yellow 2, 13, 62, 74, 151, 168 und 191;
   C.I. Pigment Orange 5, 13, 34, 36, 64 und 67;
   C.I. Pigment Red 1, 2, 3, 4, 5, 23, 48:1, 48:2, 48:3, 48:4, 49, 49:1, 51:1, 53, 53:1, 57:1, 58:2, 58:4, 112, 144, 146, 148, 166, 170, 184, 214, 220, 221 und 251;
- Diketopyrrolopyrrolpigmente:
   C.I. Pigment Orange 71 und 73;
   C.I. Pigment Red 254, 264 und 272;
- Chinophthalonpigmente:
   C.I. Pigment Yellow 138.

Bevorzugt sind dabei insbesondere C.I. Pigment Orange 67, C.I. Pigment Yellow 139, C.I. Pigment Red 170 und C.I. Pigment Red 254 sowie Kombinationen von C.I. Pigment Orange 67 mit mindestens einem dieser Pigmente.

Auch als anorganisches Pigment (A2) kann grundsätzlich jedes anorganische Pigment oder eine Kombination anorganischer Pigmente eingesetzt werden. Besondere Bedeutung haben wiederum anorganische Pigmente im Farbtonbereich Braun und Gelb. Bevorzugte anorganische Pigmente (A2) stammen daher aus der Reihe der Rutilmischphasenpigmente und Bismutvanadatpigmente.

Dabei können alle bekannten Pigmente zum Einsatz kommen. Als Rutilmischphasenpigmente seien mit farbgebenden Ionen der Metalle Nickel, Chrom, Mangan, Eisen und/oder Niob dotierte Rutilpigmente beispielhaft genannt. Geeignete Bismutvanadatpigmente können in der tetragonalen oder in der bevorzugten monoklinen Kristallmodifikation und in jeder bekannten Dotierungsform vorliegen.

Beispiele für besonders geeignete Pigmente (A2) sind: C.I. Pigment Brown 24, 29, 37 und 40 und C.I. Pigment Yellow 53, 157, 159, 160, 161, 162, 163, 164 und 189 sowie C.I. Pigment Yellow 184. Bevorzugt sind dabei vor allem C.I. Pigment Brown 24 und daneben auch C.I. Pigment Yellow 42 und 184.

Die erfindungsgemäßen Pigmentzubereitungen enthalten als weitere Komponente (B) ein wasserlösliches/wasserverdünnbares Aldehyd- oder Ketonharz.

Aldehyd- und Ketonharze sind die Polykondensationsprodukte von Aldehyden und/oder Ketonen, die als weitere Kondensationskomponente Harnstoff enthalten können. Üblicherweise werden dabei als Aldehydkomponente aliphatische Aldehyde, insbesondere Formaldehyd, aber auch Isobutyraldehyd, und als Ketonkomponente cycloaliphatische Ketone, insbesondere Cyclohexanon und seine Derivate, wie Methyl- und tert.-Butylcyclohexanon, oder araliphatische Ketone, wie Acetophenon, eingesetzt. Anstelle von Harnstoff selbst finden auch substituierte Harnstoffe und cyclisierte Derivate, wie 2-Imidazolidinon, Verwendung.

Die Aldehyd- und Ketonharze sind selbst nicht wasserlöslich/wasserverdünnbar, können jedoch durch Modifizierung in wasserlösliche/wasserverdünnbare Produkte überführt werden.

Eine Möglichkeit der Modifizierung besteht in der Umsetzung mit säuregruppenhaltigen Polymeren, z.B. Polyestern, dimerisierten oder oligomerisierten ungesättigten aliphatischen Carbonsäuren und/oder säuregruppenhaltigen Polymerisaten von olefinisch ungesättigten Monomeren, bei erhöhter Temperatur (vorzugsweise in der Schmelze bei 100 bis 220°C) mit anschließender Neutralisation des Umsetzungsprodukts. Derartige modifizierten Aldehyd- und Ketonharze sind z.B. in der EP-A-908 486 beschrieben.

Bevorzugt sind Aldehyd- und Ketonharze, die mit Alkydharzen modifiziert sind. Alkydharze sind die Kondensationsprodukte von Polyestern aus mehrwertigen Alkoholen und mehrwertigen Carbonsäure(anhydride)n mit Fettsäuren, synthetischen Monocarbonsäuren oder fetten Ölen.

Typische Beispiele für die Bestandteile der Alkydharze sind: Alkoholkomponenten, wie Glycerin, Pentaerythrit, Trimethylolethan, Trimethylolpropan und Diole wie Ethylen- und/oder Propylenglykol, Diethylenglykol und Neopentylglykol; Carbonsäure(anhydride), wie Phthalsäure(anhydrid), Iso- und Terephthalsäure, Trimellitsäureanhydrid, Adipinsäure, Azelainsäure und Sebacinsäure; Öle bzw. Fettsäuren/Monocarbonsäuren, wie trocknende Öle, z.B. Leinöl, Oiticicaöl und Holzöl; halbtrocknende Öle, z.B. Sojaöl, Sonnenblumenöl, Safloröl, Ricinenöl und Tallöl; nicht-trocknende Öle, z.B. Ricinusöl, Kokosöl und Erdnußöl; freie Fettsäuren dieser Öle und synthetische Monocarbonsäuren.

Eine weitere Möglichkeit zur Modifizierung der Aldehyd- und Ketonharze besteht in der Umsetzung mit Isocyanaten.

Modifizierte Aldehyd- und Ketonharze sind im Handel z.B. unter den Namen Laropal^{®} (BASF) und Kunstharz bzw. Synthetic Resin (Degussa) erhältlich.

Die erfindungsgemäßen Pigmentzubereitungen enthalten 80 bis 99,5 Gew.-%, insbesondere 85 bis 98 Gew.-%, Pigmentkomponente (A) aus mindestens einem organischen Pigment (A1) und mindestens einem anorganischen Pigment (A2) und 0,5 bis 20 Gew.-%, vor allem 2 bis 15 Gew.-%, wasserlösliches/wasserverdünnbares Aldehyd- oder Ketonharz (B).

Die Pigmentkomponente (A) enthält dabei in der Regel 20 bis 99 Gew.-% des organischen Pigments (A1) und 1 bis 80 Gew.-% anorganisches Pigment (A2), bevorzugt 30 bis 70 Gew.-% organisches Pigment (A1) und vorzugsweise 30 bis 70 Gew.-% anorganisches Pigment (A2).

Die erfindungsgemäßen Pigmentzubereitungen sind vorteilhaft nach dem ebenfalls erfindungsgemäßen Herstellungsverfahren zu erhalten, bei dem organisches Pigment (A1) und anorganisches Pigment (A2) einer Zerkleinerung in wäßrigem Medium in Gegenwart des Harzes (B) unterzogen werden und die erhaltene Pigmentzubereitung anschließend auf übliche Weise isoliert und getrocknet wird.

Das Harz (B) bewirkt hierbei eine gleichmäßige Benetzung sowohl der überwiegend hydrophilen anorganischen Pigmente (A2) als auch der vorwiegend hydrophoben organischen Pigmente (A1) mit dem wäßrigem Medium, so daß eine homogene Vermischung der Pigmente beim Zerkleinerungsprozeß vorliegt.

Beim erfindungsgemäßen Verfahren können sowohl die bei der Pigmentsynthese anfallenden Rohpigmente als auch Pigmente, die bereits einem Pigmentfinish, d.h. einer Einstellung von Teilchenform und -größe, unterzogen worden sind, eingesetzt werden.

Die Zerkleinerung wird erfindungsgemäß in wäßrigem Medium vorgenommen. Dabei wird vorzugsweise Wasser allein als flüssige Phase eingesetzt, es ist jedoch auch möglich, Mischungen von Wasser mit wassermischbaren organischen Lösungsmitteln, z.B. Alkoholen, einzusetzen. Üblicherweise liegt der Pigmentgehalt in der wäßrigen Suspension bei 5 bis 40 Gew.-%.

Die Zerkleinerung kann in einem schnell laufenden Rührscheibengerät, einem Dissolver, durchgeführt werden. Die Zerteilung wird hier durch Scherfelder im Nahbereich der am Rand mit Prallvorrichtungen versehenen Rührscheibe sowie durch den Druckwechsel, der im Dispergiergut zwischen eng benachbarten Zonen von hohem Druck und Unterdruck entsteht, bewirkt.

Die Zerkleinerung kann auch durch eine klassische Naßmahlung in einer Kugelmühle oder einer Rührwerkskugelmühle, die vorzugsweise mit 100 bis 2000 Upm betrieben wird, erfolgen. Als Mahlkörper eignen sich z.B. Glasperlen, Zirkonoxidperlen oder Sandkörner mit einem Durchmesser von etwa 0,4 bis 30 mm.

Üblicherweise wird so lange dispergiert bzw. gemahlen, bis die mittlere Teilchengröße des anorganischen Pigments (A2) bei etwa 0,4 bis 2 µm liegt.

Die Trocknung der erhaltenen Pigmentsuspension kann - nach Abtrennung der Mahlkörper im Fall der Mahlung - vorteilhaft in einer Sprühtrocknungsanlage vorgenommen werden, wobei die erfindungsgemäßen Pigmentzubereitungen in Form eines staubarmen Granulats anfallen. Als geeignete Aggregate sind z.B. Sprühturm und Sprühwirbelbett, bei dem das Wasser unter Begasung mit heißem Gas, z.B. Luft oder Stickstoff, verdampft wird, zu nennen. Durch gezielte Auswahl der Trocknungsbedingungen kann die Größe des Granulats gezielt gesteuert werden.

Selbstverständlich kann die Pigmentsuspension auch in einem üblichen Trockner, z.B. einem Schaufeltrockner, getrocknet werden. Das Trockengut kann hierbei gewünschtenfalls einer gleichzeitig oder auch anschließenden Desagglomerieung unterzogen werden, um die sich bei der Trocknung bildenden Agglomerate zu zerstören. In diesem Fall werden pulverförmige Pigmentzubereitungen erhalten.

Die erfindungsgemäßen Pigmentzubereitungen sind hervorragend zur Einfärbung von insbesondere auch wasserbasierenden Lacken und Druckfarben, von Kunststoffen, Baustoffen und Zubereitungen der dekorativen Kosmetik geeignet. Sie zeichnen sich hierbei durch ihre vorteilhaften koloristischen Eigenschaften, insbesondere ihre hohe Farbstärke, und ihre Homogenität aus.

### Beispiele

Herstellung und Beurteilung von erfindungsgemäßen Pigmentzubereitungen

Die Herstellung der Pigmentzubereitungen erfolgte wie im folgenden beschrieben. Die für das jeweilige Harz (B) angegebenen Mengen bezieht sich dabei auf das gelöste Harz selbst. Als Harz (B) wurden eingesetzt:
(B1): wäßrige Lösung des alkydharzmodifizierten Aldehydharzes Laropal^{®} LR 9008 (Feststoffgehalt: 35%; pH-Wert: 8)
(B2): wäßrige Lösung des alkydharzmodifizierten Aldehydharzes Laropal LR 8991 (Feststoffgehalt: 35%; pH-Wert: 8)

Die jeweils hergestellten wäßrigen Pigmentsuspensionen waren homogen durchmischt und zeigten keinerlei Phasensegregation. Im Gegensatz dazu zeigten Pigmentsuspensionen, die kein Harz (B) enthielten, eine Separation von hydrophobem organischen Pigment und anorganischem Pigment.

Die erfindungsgemäßen Pigmentzubereitungen zeigten in einem Alkyd-Melamin-Einbrennlack eine Farbstärke auf mindestens demselben Niveau wie die Farbstärke von durch Trockenmahlung ohne Zusatzstoffe gemäß der älteren deutschen Patentanmeldung 10 2004 040 670.7 erhaltenen Pigmentzubereitungen.

### Beispiel 1

Eine Mischung aus 28,4 Gew.-Teilen C.I. Pigment Orange 67, 9 Gew.-Teilen C.I. Pigment Yellow 139, 52,6 Gew.-Teilen C.I. Pigment Brown 24, 10 Gew.-Teilen des Harzes (B1) und 360 Gew.-Teilen Wasser wurde 2 min in einem Dissolver Dispermat^{®} N1 (Fa. VMA) gemahlen und anschließend bei 110°C im Trockenschrank getrocknet.

### Beispiel 2

Eine Mischung aus 28,4 Gew.-Teilen C.I. Pigment Orange 67, 9 Gew.-Teilen C.I. Pigment Yellow 139, 52,6 Gew.-Teilen C.I. Pigment Brown 24, 10 Gew.-Teilen des Harzes

(B2) und 360 Gew.-Teilen Wasser wurde 2 min in einem Dissolver Dispermat N1 (Fa. VMA) gemahlen und anschließend bei 110°C im Trockenschrank getrocknet.

### Beispiel 3

Eine Mischung aus 29,9 Gew.-Teilen C.I. Pigment Orange 67, 9,5 Gew.-Teilen C.I. Pigment Yellow 139, 55,6 Gew.-Teilen C.I. Pigment Brown 24, 5 Gew.-Teilen des Harzes (B1) und 380 Gew.-Teilen Wasser wurde 2 min in einem Dissolver Dispermat N1 (Fa. VMA) gemahlen und anschließend bei 110°C im Trockenschrank getrocknet.

### Beispiel 4

Eine Mischung aus 29,9 Gew.-Teilen C.I. Pigment Orange 67, 9,5 Gew.-Teilen C.I. Pigment Yellow 139, 55,6 Gew.-Teilen C.I. Pigment Brown 24, 5 Gew.-Teilen des Harzes (B1) und 380 Gew.-Teilen Wasser wurde 2 min in einer Perlmühle Molinex N1 (Fa. Netzsch) gemahlen und anschließend bei 110°C im Trockenschrank getrocknet.

### Beispiel 5

Eine Mischung aus 29,9 Gew.-Teilen C.I. Pigment Red 254, 9,5 Gew.-Teilen C.I. Pigment Yellow 139, 55,6 Gew.-Teilen C.I. Pigment Brown 24, 5 Gew.-Teilen des Harzes (B1) und 380 Gew.-Teilen Wasser wurde 2 min in einem Dissolver Dispermat N1 (Fa. VMA) gemahlen und anschließend bei 110°C im Trockenschrank getrocknet.

### Beispiel 6

Eine Mischung aus 29,9 Gew.-Teilen C.I. Pigment Red 170, 9,5 Gew.-Teilen C.I. Pigment Yellow 139, 55,6 Gew.-Teilen C.I. Pigment Brown 24, 5 Gew.-Teilen des Harzes (B1) und 380 Gew.-Teilen Wasser wurde 2 min in einem Dissolver Dispermat N1 (Fa. VMA) gemahlen und anschließend bei 111 °C im Trockenschrank getrocknet.

## Patentansprüche

1. Feste Pigmentzubereitungen, enthaltend als wesentliche Komponenten
(A) 80 bis 99,5 Gew.-% einer Pigmentkomponente aus mindestens einem organischen Pigment (A1) und einem anorganischen Pigment (A2)
und
(B) 0,5 bis 20 Gew.-% mindestens eines wasserlöslichen/wasserverdünnbaren Aldehyd- oder Ketonharzes.

2. Pigmentzubereitungen nach Anspruch 1, bei denen die Pigmentkomponente (A) 20 bis 99 Gew.-% des organischen Pigments (A1) und 1 bis 80 Gew.-% des anorganischen Pigments (A2) enthält.

3. Pigmentzubereitungen nach Anspruch 1 oder 2, die als Komponente (A1) mindestens ein organisches Pigment aus der Gruppe der Pyrazolochinazolonpigmente, Isoindolinpigmente, Azopigmente, Diketopyrrolopyrrolpigmente und Chinophthalonpigmente enthalten.

4. Pigmentzubereitungen nach den Ansprüchen 1 bis 3, die als Komponente (A1) mindestens ein Pyrazolonchinazolonpigment enthalten

5. Pigmentzubereitungen nach den Ansprüchen 1 bis 4, die als Komponente (A2) mindestens ein anorganisches Pigment aus der Gruppe der Rutilmischphasenpigmente und Bismutvanadatpigmente enthalten.

6. Pigmentzubereitungen nach den Ansprüchen 1 bis 5, die als Komponente (B) mindestens ein Aldehyd- oder Ketonharz enthalten, das mit einem Alkydharz oder mit Isocyanaten modifiziert ist.

7. Verfahren zur Herstellung von Pigmentzubereitungen gemäß den Ansprüchen 1 bis **dadurch gekennzeichnet, daß** man das organische Pigment (A1) und das anorganische Pigment (A2) einer Zerkleinerung in wäßrigem Medium in Gegenwart des Harzes (B) unterzieht und die erhaltene Pigmentzubereitung anschließend auf übliche Weise isoliert und trocknet.

8. Verfahren nach Anspruch 7, **dadurch gekennzeichnet, daß** man zur Zerkleinerung eine Kugelmühle oder Rührwerkskugelmühle oder einen Dissolver einsetzt.

9. Verwendung von Pigmentzubereitungen gemäß den Ansprüchen 1 bis 6 zur Einfärbung von Lacken, Druckfarben, Kunststoffen, Baustoffen und Zubereitungen der dekorativen Kosmetik.

## Claims

1. A solid pigment preparation comprising as essential components
(A) 80 to 99.5% by weight of a pigment component comprising at least one organic pigment (A1) and one inorganic pigment (A2)
and
(B) 0.5 to 20% by weight of at least one water-soluble/water-dilutable aldehyde resin or ketone resin.

2. The pigment preparation according to claim 1, wherein the pigment component (A) comprises 20% to 99% by weight of the organic pigment (A1) and 1 % to 80% by weight of the inorganic pigment (A2).

3. The pigment preparation according to claim 1 or 2, comprising as component (A1) at least one organic pigment from the group of pyrazoloquinazolone pigments, isoindoline pigments, azo pigments, diketopyrrolopyrrole pigments, and quinophthalone pigments.

4. The pigment preparation according to any of claims 1 to 3, comprising as component (A1) at least one pyrazolonequinazolone pigment.

5. The pigment preparation according to any of claims 1 to 4, comprising as component (A2) at least one inorganic pigment from the group of rutile mixed phase pigments and bismuth vanadate pigments.

6. The pigment preparation according to any of claims 1 to 5, comprising as component (B) at least one aldehyde resin or ketone resin which has been modified with an alkyd resin or with isocyanates.

7. A process for preparing a pigment preparation according to any of claims 1 to 6, which comprises subjecting the organic pigment (A1) and the inorganic pigment (A2) to comminution in an aqueous medium in the presence of the resin (B) and subsequently subjecting the resultant pigment preparation to conventional isolation and drying.

8. The process according to claim 7, wherein comminution is carried out using a stirred or unstirred ball mill or a dissolver.

9. The use of a pigment preparation according to any of claims 1 to 6 for coloring paints, printing inks, plastics, building materials, and decorative cosmetic preparations.

## Revendications

1. Préparations de pigments solides, contenant comme composants essentiels
(A) 80 à 99,5 % en poids d'un composant pigment constitué d'au moins un pigment organique (A1) et un pigment inorganique (A2)
et
(B) 0,5 à 20 % en poids d'au moins une résine aldéhydique ou cétonique hydrosoluble/diluable à l'eau.

2. Préparations de pigments selon la revendication 1, dans lesquelles le composant pigment (A) contient 20 à 99 % en poids du pigment organique (A1) et 1 à 80 % en poids du pigment inorganique (A2).

3. Préparations de pigments selon la revendication 1 ou 2, qui contiennent en tant que composant (A1) au moins un pigment organique choisi dans le groupe des pigments pyrazoloquinazolone, pigments iso-indoline, pigments azoïques, pigments dicétopyrrolopyrrole et pigments quinophtalone.

4. Préparations de pigments selon les revendications 1 à 3, qui contiennent comme composant (A1) au moins un pigment pyrazoloquinazolone.

5. Préparations de pigments selon les revendications 1 à 4, qui contiennent comme composant (A2) au moins un pigment inorganique choisi dans le groupe des pigments à phase mixte de rutile et des pigments vanadate de bismuth.

6. Préparations de pigments selon les revendications 1 à 5, qui contiennent comme composant (B) au moins une résine aldéhydique ou cétonique, qui est modifiée avec une résine alkyde ou avec des isocyanates.

7. Procédé pour la production de préparations de pigments selon les revendications 1 à 6, **caractérisé en ce qu'**on soumet le pigment organique (A1) et le pigment inorganique (A2) à une fragmentation en milieu aqueux, en présence de la résine (B), et la préparation de pigment obtenue est ensuite isolée et séchée à la manière usuelle.

8. Procédé selon la revendication 7, **caractérisé en ce que** pour la fragmentation on utilise un broyeur à boulets ou un broyeur à boulets et à système d'agitation ou un dissolveur.

9. Utilisation de préparations de pigments selon les revendications 1 à 6, pour la coloration de peintures, d'encres d'impression, de matières plastiques, de matériaux de construction et de préparations de la cosmétique de maquillage.
